# FASCICULE DE BREVET EUROPEEN

(11) **EP 3 776 881 B1**
(45) Date de publication et mention de la délivrance du brevet: **19.06.2024**
(21) Numéro de dépôt: 19722163.3
(22) Date de dépôt: 04.04.2019
(51) Int. Cl.: H04B 3/54, H04B 3/56, H04B 1/38

(54) **DISPOSITIF D'ÉMISSION DE DONNÉES, DISPOSITIF DE RÉCEPTION DE DONNÉES ET SYSTÈME DE TRANSMISSION DE DONNÉES**
DATENÜBERTRAGUNGSVORRICHTUNG, DATENEMPFANGSVORRICHTUNG UND DATENÜBERTRAGUNGSSYSTEM
DATA TRANSMISSION DEVICE, DATA RECEPTION DEVICE AND DATA TRANSMISSION SYSTEM

(30) Priorité: 04.04.2018 US 201862652538 P; 13.07.2018 FR 1856510; 25.10.2018 FR 1859890
(43) Date de publication de la demande: 17.02.2021
(73) Titulaire: SAFRAN AEROTECHNICS, 78370 Plaisir (FR)
(72) Inventeur: RACIC, Zoran, 75003 PARIS (FR)
(74) Mandataire: Plasseraud IP
(86) Numéro de dépôt international: PCT/FR2019/050792
(87) Numéro de publication internationale: WO 2019/193291

(56) Documents cités:
- FR-A1- 2 937 199
- US-A1- 2004 258 141
- US-B1- 6 192 069
- GRASSI F ET AL: "Effects of imbalance on conducted immunity of a PLC link onto a DC power-bus for spacecraft", 2015 ASIA-PACIFIC SYMPOSIUM ON ELECTROMAGNETIC COMPATIBILITY (APEMC), IEEE, 26 mai 2015 (2015-05-26), pages 665-668, XP033189121, DOI: 10.1109/APEMC.2015.7175334 ISBN: 978-1-4799-6668-4 [extrait le 2015-08-03]
- LARHZAOUI THOMAS ET AL: "OFDM PLC transmission for aircraft flight control system", 18TH IEEE INTERNATIONAL SYMPOSIUM ON POWER LINE COMMUNICATIONS AND ITS APPLICATIONS, IEEE, 30 mars 2014 (2014-03-30), pages 220-225, XP032594272, DOI: 10.1109/ISPLC.2014.6812333

## Description

La présente invention se situe dans le domaine des systèmes de transmission de données pour aéronef.

Les aéronefs comportent un réseau de distribution de puissance et un réseau de transmission de données indépendant du réseau de distribution de puissance.

Les documents US 2004/258141 et FR 2 937 199 divulguent un tel système avionique. Le document US 6 192 069 divulgue un réseau comprenant plusieurs dispositifs semi-conducteurs. Le document "Effect of imbalance on conducted immunity of a PLC link onto a DC Power bus for spacecraft" de GRASSI et Al. décrit la propagation du bruit dans une liaison de communication. Le document "OFDM PLC transmission for aircraft flight control system" de LARHZAOUI Thomas et Al. étudie la transmission de données sur un réseau à courant continu haute tension pour un système de de contrôle de vol.

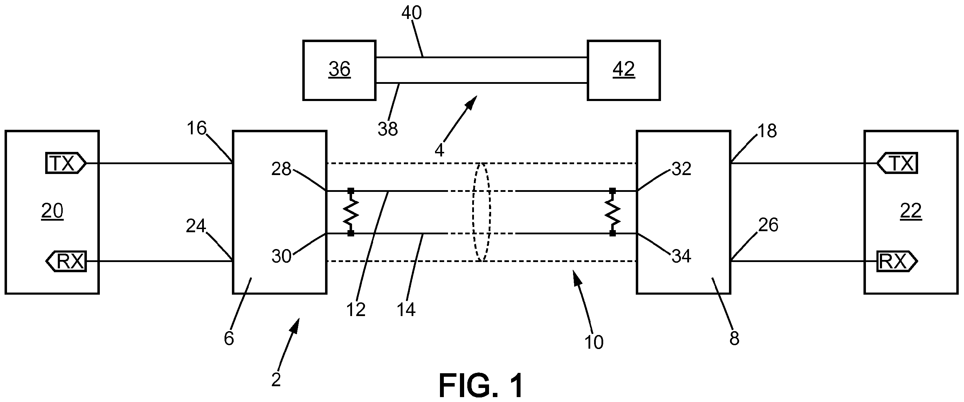

La figure 1 représente un exemple d'un système 2 de transmission de puissance et d'un système 4 de transmission de données généralement montés dans un aéronef. Le système 2 de transmission de puissance est indépendant du système 4 de transmission de données.

Le système 2 de transmission de données comprend un premier émetteur-récepteur 6, un deuxième émetteur - récepteur 8 et un câble 10 connectant le premier émetteur-récepteur 6 au deuxième émetteur - récepteur 8. Le câble 10 comporte deux brins 12, 14. Chaque émetteur-récepteur 6, 8 comprend une entrée 16, 18 connectée à une unité de traitement 20, 22 pour recevoir des données à transmettre, une sortie 24, 26 connectée à l'unité de traitement 20, 22 pour transmettre les données réceptionnées et deux entrées-sorties 28, 30, 32, 34 connectées aux brins 12, 14 du câble.

Le système 4 de transmission de puissance comporte un premier câble 38 et un deuxième câble 40 connectés d'une part, à une source 36 d'alimentation en tension de l'aéronef et, d'autre part, à une unité de conversion de puissance 42 ou à des équipements électriques. Le premier câble 38 est par exemple connecté à une tension de 28 Volts. Le deuxième câble est connecté à une masse.

Les câbles électriques sont coûteux et augmentent considérablement la masse de l'aéronef ainsi que la complexité des harnais de connexion.

En conséquence, les avionneurs souhaitent réduire le nombre de câbles électriques dans les aéronefs d'autant plus que les dispositifs électriques sont plus en plus nombreux.

A cet effet, il est connu de transmettre des données par multiplexage.

Par ailleurs, il est connu de transmettre des données sur des câbles dans certaines applications domestiques. Toutefois, les systèmes utilisés dans les applications domestiques ne sont pas déterministes et ne peuvent donc pas être utilisés dans un aéronef en raison des normes aéronautiques.

La présente invention a pour but de diminuer le nombre et le poids des câbles électriques dans un aéronef.

A cet effet, la présente invention a pour objet un dispositif d'émission comprenant les caractéristiques énoncées dans la revendication 1.

Avantageusement, les composants capacitifs de couplage et le mode de transmission des données par une onde porteuse modulée permet de transmettre de la puissance et des données sur le même lien de communication. Il en résulte une diminution considérable du nombre de fils électriques dans l'aéronef ainsi qu'une simplification des harnais de connexion des câbles électriques.

Avantageusement, ce dispositif d'émission permet de transmettre une quantité de puissance uniquement limitée par le type câble utilisé.

Avantageusement, ce dispositif d'émission peut être utilisé avec tout type de protocole.

Suivant des modes particuliers de réalisation, le dispositif d'émission comporte l'une ou plusieurs des caractéristiques énoncées dans les revendications 2 à 5.

La présente invention a pour objet un dispositif de réception comprenant les caractéristiques énoncées dans la revendication 6.

Suivant des modes particuliers de réalisation, le dispositif de réception comporte l'une ou plusieurs des caractéristiques énoncées dans les revendications 7 et 8.
Enfin, la présente invention a pour objet un système de transmission de données et de puissance comportant un dispositif d'émission comme mentionné ci-dessus et un dispositif de réception comprenant un récepteur comprenant une entrée connectée au lien de communication, le récepteur étant propre à réceptionner une onde porteuse modulée par un signal représentatif de données,
- au moins une ligne de puissance connectée au lien de communication en un point de connexion ;
- au moins un composant capacitif de couplage connecté entre l'entrée du récepteur et le point de connexion, ledit composant capacitif de couplage étant propre à transmettre l'onde porteuse modulée et à bloquer la transmission la tension d'alimentation.

L'invention sera mieux comprise à la lecture de la description qui va suivre, donnée uniquement à titre d'exemple et faite en se référant aux figures sur lesquelles :
- la figure 1 est une vue d'un exemple de système de transmission de données et un système de transmission de puissance appartenant à l'état de la technique ;
- la figure 2 est une vue schématique d'un système de transmission de données et de puissance selon un premier mode de réalisation de l'invention ; et
- la figure 3 est une vue schématique d'un système de transmission de données et de puissance selon un deuxième mode de réalisation de l'invention.

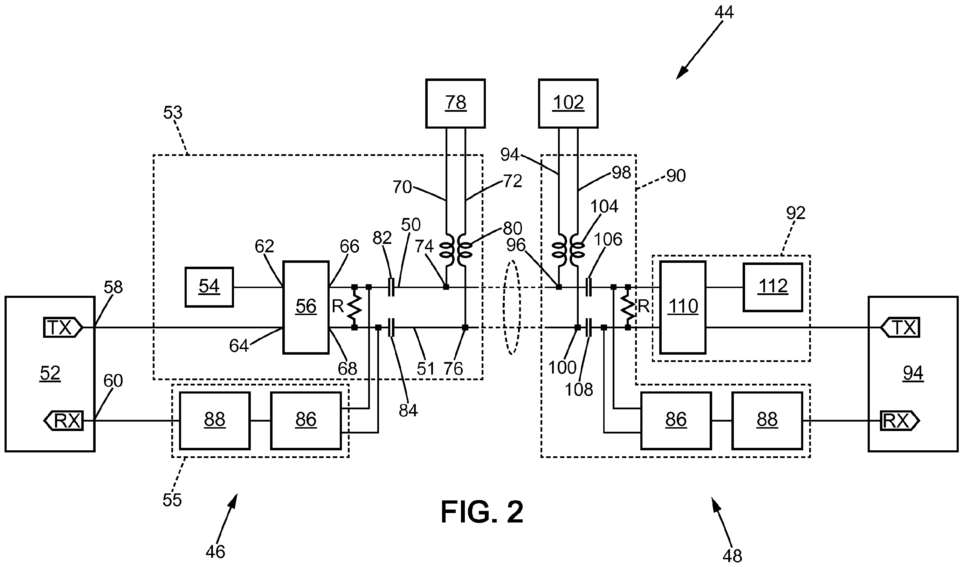

En référence à la figure 2, le système 44 de transmission de données et de puissance selon un mode de réalisation de l'invention comporte un dispositif 46 d'émission-réception de données et de transmission de puissance, un dispositif 48 d'émission-réception de données et de réception de puissance, un lien de communication 50 et un lien de communication supplémentaire 51.

La présente invention a pour objet un dispositif de réception propre à réceptionner des données, ledit dispositif de réception comprenant :
- un récepteur comprenant une entrée propre à réceptionner une onde porteuse modulée par un signal représentatif de données,
- un lien de communication connecté à l'entrée du récepteur, le lien de communication étant destiné à être porté à une tension d'alimentation et à transmettre l'onde porteuse modulée,
- au moins une ligne de puissance connectée au lien de communication en un point de connexion ;
- au moins un composant capacitif de couplage connecté entre l'entrée du récepteur et le point de connexion, ledit composant capacitif de couplage étant propre à transmettre l'onde porteuse modulée et à bloquer la transmission la tension d'alimentation.

Suivant des modes particuliers de réalisation, le dispositif de réception comporte l'une ou plusieurs des caractéristiques suivantes :
- le récepteur comprend une entrée supplémentaire ; ledit dispositif de réception comprenant en outre :
   - un lien de communication supplémentaire connecté à l'entrée supplémentaire,
   - une ligne de puissance supplémentaire connectée au lien de communication supplémentaire en un point de connexion supplémentaire,
   - au moins un composant capacitif de couplage supplémentaire connecté entre l'entrée supplémentaire du récepteur et le point de connexion supplémentaire, ledit composant capacitif de couplage supplémentaire étant propre à transmettre l'onde porteuse modulée et bloquer la transmission de la tension d'alimentation.
- le dispositif de réception comprend en outre un filtre connecté à la ligne de puissance, ledit filtre étant propre à bloquer l'onde porteuse modulé.
- le dispositif de réception comporte en outre une source d'alimentation en tension connectée à la ligne de puissance.
- le dispositif de réception comporte en outre un ensemble d'équipements électriques connecté à la ligne de puissance.

Enfin, la présente invention a pour objet un système de transmission de données et de puissance comportant un dispositif d'émission comme mentionné ci-dessus et un dispositif de réception comprenant un récepteur comprenant une entrée connectée au lien de communication, le récepteur étant propre à réceptionner une onde porteuse modulée par un signal représentatif de données,
- au moins une ligne de puissance connectée au lien de communication en un point de connexion ;
- au moins un composant capacitif de couplage connecté entre l'entrée du récepteur et le point de connexion, ledit composant capacitif de couplage étant propre à transmettre l'onde porteuse modulée et à bloquer la transmission la tension d'alimentation.

L'invention sera mieux comprise à la lecture de la description qui va suivre, donnée uniquement à titre d'exemple et faite en se référant aux figures sur lesquelles :
- la figure 1 est une vue d'un exemple de système de transmission de données et un système de transmission de puissance appartenant à l'état de la technique ;
- la figure 2 est une vue schématique d'un système de transmission de données et de puissance selon un premier mode de réalisation de l'invention ; et

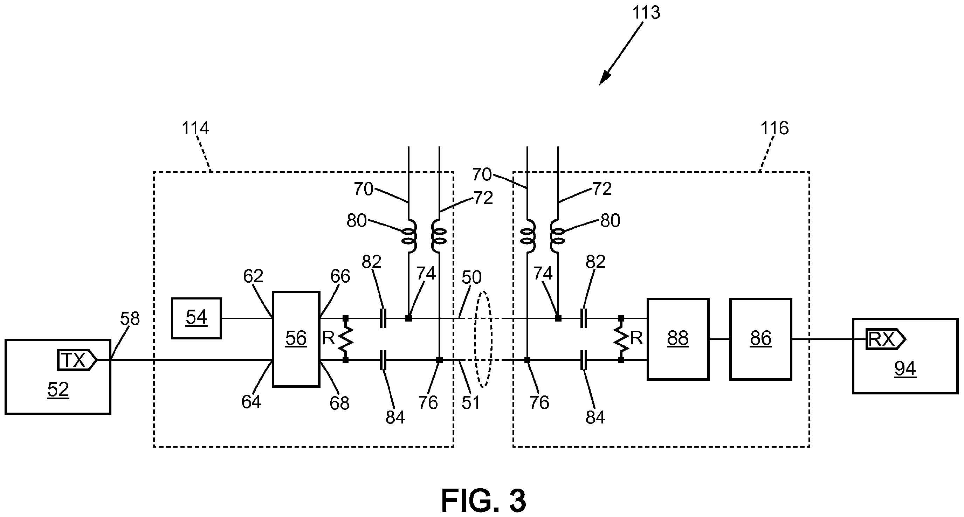

- la figure 3 est une vue schématique d'un système de transmission de données et de puissance selon un deuxième mode de réalisation de l'invention.

En référence à la figure 2, le système 44 de transmission de données et de puissance selon un mode de réalisation de l'invention comporte un dispositif 46 d'émission-réception de données et de transmission de puissance, un dispositif 48 d'émission-réception de données et de réception de puissance, un lien de communication 50 et un lien de communication supplémentaire 51.

Les liens de communication 50, 51 relient le dispositif d'émission-réception 46 au dispositif d'émission-réception 48. Les liens de communication 50, 51 sont par exemple constitués par un premier brin 50 et un deuxième brin 51 d'un câble à impédance contrôlé. Un câble de type RS 485 ou un câble Ethernet peut par exemple être utilisé. Le lien de communication 50 est isolé du lien de communication 51. Cette isolation est matérialisée sur la figure 2 par les condensateurs 82,84,106 et 108.

Le dispositif 46 d'émission-réception de données et de transmission de puissance comporte une unité de traitement 52, une unité d'émission 53 de données et de puissance et un récepteur 55 apte à réceptionner des données.

L'unité de traitement 52 est connectée à l'unité d'émission 53 et au récepteur 55. L'unité de traitement 52 comporte une sortie 58 propre à générer un signal représentatif de données à transmettre au dispositif d'émission-réception 48, et une entrée 60 propre à recevoir des données émises par le dispositif d'émission-réception 48.

L'unité de traitement 52 est constituée par un contrôleur de protocole.

L'unité d'émission 53 est connectée au lien de communication 50 et au lien de communication supplémentaire 51. Elle est apte à émettre les données provenant de l'unité de traitement sur les liens de communication 50,51.

L'unité d'émission 53 comporte un oscillateur 54 commandé en tension, et un émetteur 56 connecté à la sortie 58 de l'unité de traitement et à l'oscillateur 54.

L'oscillateur 54 est apte à générer une onde porteuse à fréquence fixe. Cette onde porteuse est par exemple un signal carré ou une sinusoïde.

L'émetteur 56 est un émetteur classique utilisé d'une manière différente de son utilisation habituelle. Ainsi, l'émetteur 56 comporte une entrée 62 généralement prévue pour recevoir des données à transmettre, une entrée d'activation 64 généralement prévue pour recevoir un signal d'activation (généralement appelé « enabling signal » en anglais) et au moins deux sorties 66, 68 connectées l'une au lien de communication 50, l'autre, au lien de communication supplémentaire 51. Dans son fonctionnement classique, le signal d'activation autorise le fonctionnement de l'émetteur. Ainsi, dans son fonctionnement classique, l'émetteur 56 fonctionne lorsqu'il reçoit le signal d'activation et à ne fonctionne plus quand il ne reçoit plus le signal d'activation.

Selon la présente invention, l'entrée 62 et l'entrée d'activation 64 sont détournées de leur utilisation usuelle. Ainsi, selon l'invention, l'entrée 62 est connectée à la sortie de l'oscillateur 54 pour recevoir l'onde porteuse. L'entrée d'activation 64 est connectée à la sortie 58 de l'unité de traitement. L'entrée d'activation 64 est ainsi propre à réceptionner les données à transmettre au dispositif d'émission-réception 48. L'émetteur 56 est propre à moduler l'onde porteuse réceptionnée à l'entrée 62, par le signal réceptionné à l'entrée d'activation 62. Ainsi, l'émetteur 56 est apte à moduler l'onde porteuse par le signal représentatif des données.

L'émetteur 56 est par exemple propre à réaliser une modulation tout ou rien (en anglais « On Off Keying »). Dans ce cas, l'onde porteuse est un signal carré. L'onde porteuse modulée par le signal représentatif des données est présente pour un signal logique égal à la valeur 0. L'onde porteuse modulée par le signal représentatif des données est absente pour un signal logique égal à la valeur 1.

L'émetteur 56 est apte à transmettre l'onde porteuse modulée en mode différentiel sur le lien de communication 50 et sur le lien de communication supplémentaire 51. La transmission selon un mode différentiel permet avantageusement de diminuer les perturbations électromagnétiques générées lors de la transmission de puissance et de l'onde porteuse modulée sur les liens de communications 50,51 et augmente l'immunité au bruit en réception.

L'unité d'émission 53 comporte en outre une ligne de puissance 70 connectée au lien de communication 50 en un point de connexion 74, et une ligne de puissance supplémentaire 72 connectée au lien de communication supplémentaire 51 en un point de connexion supplémentaire 76.

L'unité d'émission 53 peut également comporter une source 78 d'alimentation en tension de l'aéronef telle que le générateur de l'aéronef ou une batterie. Les lignes de puissance 70, 72 sont connectées à cette source d'alimentation 78. La ligne de puissance 70 est par exemple connectée à un potentiel de 28 Volts. La ligne de puissance supplémentaire 72 est connectée au retour de courant de la source d'alimentation en tension.

Avantageusement, l'unité d'émission 53 comporte un filtre 80 connecté à la ligne de puissance 70 en amont du point de connexion 74 et à la ligne de puissance 72 en aval du point de connexion 76, en considérant le sens du courant d'alimentation provenant de la source d'alimentation 78. En particulier, le filtre 80 est connecté entre cette source d'alimentation 78 et les points de connexion 74, 76.

Le filtre 80 permet de bloquer les composantes alternatives des signaux parcourant les lignes de puissance 70,72 et empêche ainsi l'onde porteuse modulée d'être transmise à la source d'alimentation 80.

Ce filtre 80 est par exemple constitué par un transformateur.

L'unité d'émission 53 comporte de plus un composant capacitif de couplage 82 connecté entre la sortie 66 de l'émetteur et le point de connexion 74, et un composant capacitif de couplage supplémentaire 84 connecté entre la sortie supplémentaire 68 de l'émetteur et le point de connexion supplémentaire 76.

Les composants capacitifs de couplage 82, 84 sont propres à transmettre l'onde porteuse modulée et à bloquer la tension d'alimentation. Ainsi la tension d'alimentation appliquée par la source d'alimentation 78 n'est pas transmise à l'émetteur 56.

Les composants capacitifs de couplage 82, 84 sont, par exemple, constitués par une capacité ou un ensemble de capacités.

Le récepteur 55 est connecté aux liens de communication 50, 51. Il comporte une unité de conversion 86 et une unité de filtrage et de comparaison 88.

L'unité de conversion 86 comprend une entrée 87 connectée au lien de communication 50 entre l'entrée 66 et le composant capacitif de couplage 82, et une entrée 89 connectée au lien de communication supplémentaire 51 entre l'entrée supplémentaire 68 et le composant capacitif de couplage supplémentaire 84.

Avantageusement, les composants capacitifs de couplage 82, 84 bloquent la tension d'alimentation afin qu'elle ne soit pas transmise au récepteur 55.

L'unité de conversion 86 est propre à convertir les signaux transmis sur les liens de communications 50,51 d'un mode de transmission différentiel en un mode de transmission non différentiel. Cette conversion est réalisée de façon classique par soustraction des signaux transmis sur chaque lien de communication.

L'unité de filtrage et de comparaison 88 est connectée à l'unité de conversion 86 et à l'entrée 60 de l'unité de traitement 52. Elle est apte à rejeter les fréquences indésirables (bruit) et délivrer à l'unité de traitement 52 un signal avec des niveaux de tension compatibles avec ce dernier.

Le dispositif 48 d'émission-réception de données et de réception de puissance comporte une unité 90 de réception de données et de puissance, une unité 92 d'émission de données et une unité de traitement 52.

L'unité de réception 90 est apte à réceptionner des données et de la puissance provenant du dispositif d'émission 46. L'unité de réception 90 est connectée aux liens de communication 50, 51 et à l'unité de traitement 52.

L'unité de réception 90 comporte une ligne de puissance 94 connectée au lien de communication 50 en un point de connexion 96 et une ligne de communication supplémentaire 98 connectée au lien de communication supplémentaire 51 en un point de connexion supplémentaire 100.

L'unité de réception 90 peut également comporter un ensemble d'équipements 102 connecté à la ligne de puissance 94 et à la ligne de puissance supplémentaire 98. L'ensemble d'équipements 102 comprend un ou plusieurs équipements électriques.

De préférence, l'unité de réception 90 comprend un filtre 104 connecté à la ligne de puissance 94 en aval du point de connexion 96 et à la ligne de puissance 96 en amont du point de connexion 100 en considérant le sens du courant provenant de la source d'alimentation 78 et alimentant l'ensemble d'équipements 102. En particulier, filtre 104 est connecté entre l'ensemble d'équipements 102 et les points de connexion 96 et 100. Ce filtre est apte à bloquer la composante alternative du signal transmis par les liens de communication 50, 51 et à laisser passer la composante continue. Ainsi, le filtre 104 est propre à laisser passer la tension d'alimentation et à bloquer l'onde porteuse modulée. Le filtre 104 est par exemple constitué par un transformateur.

L'unité de réception 90 comporte en outre un une unité de conversion 86 et une unité de filtrage et de comparaison 88 identiques à l'unité de conversion 86 et respectivement à l'unité de filtrage et de comparaison 88 du récepteur 55.

En particulier, l'unité de conversion 86 comporte une entrée 87 connectée au lien de communication 50 et une entrée 89 connectée au lien de communication supplémentaire 51. L'unité de conversion 86 est apte à réceptionner une onde porteuse modulée par un signal représentatif des données. L'unité de filtrage et de comparaison 88 est connectée entre l'unité de conversion 86 et l'unité de traitement 52.

L'unité de conversion 86 et l'unité de filtrage et de comparaison 88 forment un récepteur.

L'unité de réception 90 comprend en outre un composant capacitif de couplage 106 connecté entre le point de connexion 96 et l'entrée 87 de l'unité de conversion, et un composant capacitif de couplage supplémentaire 108 connecté entre le point de connexion 100 et l'entrée 89 de l'unité de conversion.

Les composants capacitifs de couplage 106, 108 sont propres à bloquer la composante continue du signal transmis par les liens de communication 50, 51 et à transmettre la composante alternative. Ainsi, les composants capacitifs de couplage 106, 108 sont aptes à bloquer la tension d'alimentation provenant de la source de tension 78 et à laisser passer l'onde porteuse modulée. Les composants capacitifs de couplage 106, 108 comprennent une ou plusieurs capacités.

L'unité d'émission 92 est connectée aux liens de communication 50, 51 et à l'unité de traitement 52. L'unité d'émission 92 comporte un oscillateur 54 et un émetteur 56 connecté à l'oscillateur 54.

L'oscillateur 54 et l'émetteur 56 de l'unité d'émission 92 sont identiques, connectés de la même façon et sont aptes à fonctionner de la même façon que l'oscillateur 54 et l'émetteur 56 de l'unité d'émission 53.

De même, l'unité de traitement 52 du dispositif d'émission-réception 48 est identique à l'unité de traitement 52 du dispositif d'émission-réception 46 et ne sera pas décrit à nouveau.

Selon une variante, le dispositif d'émission-réception 46 comporte deux oscillateurs commandés en tension propres à générer deux ondes porteuses ayant des fréquences différentes. L'émetteur 56 est connecté aux deux oscillateurs. L'émetteur 56 est propre à générer une onde modulée par le signal représentatif des données pour un signal logique égal à la valeur 0 et une onde porteuse ayant une fréquence différente pour un signal logique égal à la valeur 1.

Selon une variante moins avantageuse, le dispositif d'émission-réception 46 comporte un unique lien de communication et l'émetteur 56 comporte une unique sortie 66 propre transmettre l'onde porteuse modulée sur l'unique lien de communication dans un mode non différentiel.

En variante, le système ne comporte pas l'un ou les deux filtres 80 et 104. Dans ce cas, une partie de la porteuse modulée est transmise vers la source d'alimentation 78 ou vers les équipements électriques 102. Cela n'est pas gênant pour le fonctionnement du système.

En variante, l'ensemble d'équipements 102 est connecté au dispositif d'émission réception 46 et la source de tension 78 est connectée au dispositif d'émission réception 48. Dans ce cas, c'est le dispositif d'émission réception 48 qui alimente en tension le dispositif d'émission réception 46, les données étant transmises du dispositif d'émission-réception 46 au dispositif d'émission-réception 48 et inversement.

En fonctionnement, l'émetteur 56 module les données issues de l'unité de traitement 52 sur la porteuse générée par l'oscillateur 54 et les transmet aux liens de communication 50, 51. Les données sont ainsi transmises du dispositif d'émission-réception 46 vers le dispositif d'émission-réception 48 et inversement. Les données réceptionnées sont traitées par les unités de conversion 86 et de filtrage et de comparaison 88. En parallèle, la source d'alimentation 78 alimente en tension l'ensemble d'équipements 102.

Avantageusement, la modulation réalisée par les émetteurs 56 des dispositifs d'émission réception 46 et 48 conserve la fonctionnalité de bits dominants et récessifs et permet la transmission de puissance

La figure 3 illustre un système de transmission 113 selon un deuxième mode de réalisation de l'invention. Le système de transmission 113 est identique ou similaire au système de transmission 44 selon le premier mode de réalisation à l'exception du fait que le dispositif d'émission-réception 46 est remplacé par un dispositif d'émission 114 qui ne comporte pas de récepteur 55 et l'unité de traitement 52 ne comporte pas d'entrée 60.

De la même façon, le dispositif d'émission-réception 48 est remplacé par un dispositif de réception 116 qui ne comporte pas d'unité d'émission 92 et l'unité de traitement 94 ne comporte pas de sortie apte à transmettre des données à l'émetteur 110. Les composants du système de transmission 113 identiques ou similaires aux composants du système de transmission 44 portent la même référence et ne sont pas décrits à nouveau.

En fonctionnement, le dispositif d'émission 114 émet les données et transmet une tension d'alimentation au dispositif de réception 116. Le dispositif de réception réceptionne les données et la tension d'alimentation.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Dispositif d'émission (46,114) propre à émettre des données, ledit dispositif d'émission (46,114) comprenant :
- un oscillateur (54) propre à générer au moins une onde porteuse,
- un émetteur (56) comprenant :
• au moins une entrée (62) connectée à l'oscillateur (54),
• une entrée d'activation (64) prévue pour recevoir un signal d'activation ; l'entrée d'activation (64) étant propre à recevoir un signal représentatif de données à transmettre ;
• au moins une sortie (66) apte à générer une onde porteuse modulée par le signal représentatif des données à transmettre ;
• une sortie supplémentaire (68) ;
- un lien de communication (50) connecté à la sortie (66) de l'émetteur,
- au moins une ligne de puissance (70) connectée au lien de communication (50) en un point de connexion (74) ;
- au moins un composant capacitif de couplage (82) connecté entre la sortie (66) de l'émetteur et le point de connexion (74), le composant capacitif de couplage (82) étant propre à transmettre l'onde porteuse modulée et bloquer la transmission de la tension d'alimentation,
- un lien de communication supplémentaire (51) connecté à la sortie supplémentaire (68),
- une ligne de puissance supplémentaire (72) connectée au lien de communication supplémentaire (51) en un point de connexion supplémentaire (76),
- au moins un composant capacitif de couplage supplémentaire (84) connecté entre la sortie supplémentaire (68) de l'émetteur et le point de connexion supplémentaire (76),
- un transformateur (80) connecté à la ligne de puissance (70), ledit transformateur (80) étant propre à bloquer la transmission de l'onde porteuse modulé.

2. Dispositif d'émission (46,114) selon la revendication 1, dans lequel l'émetteur (56) est propre à générer l'onde porteuse modulée dans un mode différentiel à la sortie (66) et la sortie supplémentaire (68).

3. Dispositif d'émission (46,114) selon l'une quelconque des revendications 1 et 2, qui comprend en outre une unité de traitement (52) ayant une sortie (58) propre à générer un signal représentatif de données à transmettre, ladite sortie (58) étant connectée à l'entrée d'activation (64) de l'émetteur (56).

4. Dispositif d'émission (46,114) selon l'une quelconque des revendications 1 à 3, qui comporte en outre une source d'alimentation en tension (78) connectée à la ligne de puissance (70).

5. Dispositif d'émission (46,114) selon l'une quelconque des revendications 1 à 3, qui comporte en outre un ensemble (102) d'équipements électriques connecté à la ligne de puissance (70).

6. Dispositif de réception (48,116) propre à réceptionner des données, ledit dispositif de réception (48,116) comprenant :
- un récepteur (86,88) comprenant une entrée (87) propre à réceptionner une onde porteuse modulée par un signal représentatif de données et une entrée supplémentaire (89),
- un lien de communication (50) connecté à l'entrée (87) du récepteur, le lien de communication (50) étant destiné à être porté à une tension d'alimentation et à transmettre l'onde porteuse modulée,
- au moins une ligne de puissance (94) connectée au lien de communication (50) en un point de connexion (96);
- au moins un composant capacitif de couplage (106) connecté entre l'entrée (87) du récepteur et le point de connexion (96), ledit composant capacitif de couplage (106) étant propre à transmettre l'onde porteuse modulée et à bloquer la transmission la tension d'alimentation,
- un lien de communication supplémentaire (51) connecté à l'entrée supplémentaire (89),
- une ligne de puissance supplémentaire (98) connectée au lien de communication supplémentaire (51) en un point de connexion supplémentaire (100),
- au moins un composant capacitif de couplage supplémentaire (108) connecté entre l'entrée supplémentaire (89) du récepteur et le point de connexion supplémentaire (100), ledit composant capacitif de couplage supplémentaire (89) étant propre à transmettre l'onde porteuse modulée et bloquer la transmission de la tension d'alimentation, et,
- un filtre (104) connecté à la ligne de puissance (94), ledit filtre étant propre à bloquer l'onde porteuse modulé.

7. Dispositif de réception (48, 116) selon la revendication 6, qui comporte en outre une source d'alimentation en tension (78) connectée à la ligne de puissance (94).

8. Dispositif de réception (48, 116) selon l'une quelconque des revendications 6 et 7, qui comporte en outre un ensemble (102) d'équipements électriques connecté à la ligne de puissance (94).

9. Système (44, 113) de transmission de données et de puissance comportant un dispositif d'émission (46, 114) selon l'une quelconque des revendications 1 à 5 et un dispositif de réception (48, 116) comprenant un récepteur (86,88) comprenant une entrée (87) connectée au lien de communication (51), le récepteur étant propre à réceptionner une onde porteuse modulée par un signal représentatif de données,
- au moins une ligne de puissance (94) connectée au lien de communication (50) en un point de connexion (96);
- au moins un composant capacitif de couplage (106) connecté entre l'entrée (87) du récepteur et le point de connexion (96), ledit composant capacitif de couplage (106) étant propre à transmettre l'onde porteuse modulée et à bloquer la transmission la tension d'alimentation.

## Patentansprüche

1. Sendevorrichtung (46, 114), dazu geeignet, Daten zu senden, die Sendevorrichtung (46, 114), umfassend:
- einen Oszillator (54), dazu geeignet, wenigstens eine Trägerwelle zu generieren,
- einen Sender (56), welcher umfasst:
• wenigstens einen Eingang (62), welcher mit dem Oszillator (54) verbunden ist,
• einen Aktivierungseingang (64), welcher zum Empfangen eines Aktivierungssignals vorgesehen ist; wobei der Aktivierungseingang (64) dazu geeignet ist, ein Signal zu empfangen, welches repräsentativ für die zu übertragenden Daten ist;
• wenigstens einen Ausgang (66), dazu fähig, eine Trägerwelle zu generieren, welche von dem Signal moduliert ist, welches repräsentativ für die zu übertragenden Daten ist;
• einen zusätzlichen Ausgang (68);
- einen Kommunikationslink (50), welcher mit dem Ausgang (66) des Senders verbunden ist,
- wenigstens eine Leistungsleitung (70), welche an einem Verbindungspunkt (74) mit dem Kommunikationslink (50) verbunden ist;
- wenigstens eine kapazitive Kopplungskomponente (82), welche zwischen dem Ausgang (66) des Senders und dem Verbindungspunkt (74) verbunden ist, wobei die kapazitive Kopplungskomponente (82) dazu geeignet ist, die modulierte Trägerwelle zu übertragen und die Übertragung der Versorgungsspannung zu blockieren,
- einen zusätzlichen Kommunikationslink (51), welcher mit dem zusätzlichen Ausgang (68) verbunden ist,
- eine zusätzliche Leistungsleitung (72), welche mit dem zusätzlichen Kommunikationslink (51) an einem zusätzlichen Verbindungspunkt (76) verbunden ist,
- wenigstens eine zusätzliche kapazitive Kopplungskomponente (84), welche zwischen dem zusätzlichen Ausgang (68) des Senders und dem zusätzlichen Verbindungspunkt (76) verbunden ist,
- einen Transformator (80), welcher mit der Leistungsleitung (70) verbunden ist, wobei der Transformator (80) dazu geeignet ist, die Übertragung der modulierten Trägerwelle zu blockieren.

2. Sendevorrichtung (46, 114) nach Anspruch 1, wobei der Sender (56) dazu geeignet ist, die modulierte Trägerwelle in einem Differenzmodus an dem Ausgang (66) und an dem zusätzlichen Ausgang (68) zu erzeugen.

3. Sendevorrichtung (46, 114) nach einem der Ansprüche 1 und 2, welche außerdem eine Verarbeitungseinheit (52) mit einem Ausgang (58) umfasst, welche dazu geeignet ist, ein Signal zu erzeugen, repräsentativ für die zu übertragenden Daten, wobei der Ausgang (58) mit dem Aktivierungseingang (64) des Senders (56) verbunden ist.

4. Sendevorrichtung (46, 114) nach einem der Ansprüche 1 bis 3, welche außerdem eine Spannungsversorgungsquelle (78) enthält, welche mit der Leistungsleitung (70) verbunden ist.

5. Sendevorrichtung (46, 114) nach einem der Ansprüche 1 bis 3, welche außerdem eine Baugruppe (102) elektrischer Betriebsmittel umfasst, welche mit der Leistungsleitung (70) verbunden ist.

6. Empfangsvorrichtung (48, 116), dazu geeignet, Daten zu empfangen, die Empfangsvorrichtung (48, 116), umfassend:
- einen Empfänger (86, 88), welcher einen Eingang (87), dazu geeignet, eine Trägerwelle zu empfangen, welche von dem Signal moduliert ist, welches repräsentativ für die zu übertragenden Daten ist, und einen zusätzlichen Eingang (89) umfasst;
- einen Kommunikationslink (50), welcher mit dem Eingang (87) des Empfängers verbunden ist, wobei der Kommunikationslink (50) dazu bestimmt ist, auf eine Versorgungsspannung gebracht zu werden und die modulierte Trägerwelle zu übertragen,
- wenigstens eine Leistungsleitung (94), welche an einem Verbindungspunkt (96) mit dem Kommunikationslink (50) verbunden ist;
- wenigstens eine kapazitive Kopplungskomponente (106), welche zwischen dem Eingang (87) des Empfängers und dem Verbindungspunkt (96) verbunden ist, wobei die kapazitive Kopplungskomponente (106) dazu geeignet ist, die modulierte Trägerwelle zu übertragen und die Übertragung der Versorgungsspannung zu blockieren,
- einen zusätzlichen Kommunikationslink (51), welcher mit dem zusätzlichen Eingang (89) verbunden ist,
- eine zusätzliche Leistungsleitung (98), welche mit dem zusätzlichen Kommunikationslink (51) an einem zusätzlichen Verbindungspunkt (100) verbunden ist,
- wenigstens eine zusätzliche kapazitive Kopplungskomponente (108), welche zwischen dem zusätzlichen Eingang (89) des Empfängers und dem zusätzlichen Verbindungspunkt (100) verbunden ist, wobei die zusätzliche kapazitive Kopplungskomponente (89) dazu geeignet ist, die modulierte Trägerwelle zu übertragen und die Übertragung der Versorgungsspannung zu blockieren, und
- einen Filter (104), welcher mit der Leistungsleitung (94) verbunden ist, wobei der Filter dazu geeignet ist, die modulierte Trägerwelle zu blockieren.

7. Empfangsvorrichtung (48, 116) nach Anspruch 6, welche außerdem eine Spannungsversorgungsquelle (78) enthält, welche mit der Leistungsleitung (94) verbunden ist.

8. Empfangsvorrichtung (48, 116) nach einem der Ansprüche 6 und 7, welche außerdem eine Baugruppe (102) elektrischer Betriebsmittel umfasst, welche mit der Leistungsleitung (94) verbunden ist.

9. System (44, 113) zu einem Übertragen von Daten und Leistung, umfassend eine Sendevorrichtung (46, 114) nach einem der Ansprüche 1 bis 5 und eine Empfangsvorrichtung (48, 116), welche einen Empfänger (86, 88) umfasst, welcher einen Eingang (87) umfasst, welcher mit dem Kommunikationslink (51) verbunden ist, wobei der Empfänger dazu geeignet ist, eine Trägerwelle zu empfangen, welche von einem Signal moduliert ist, welches repräsentativ für Daten ist,
- wenigstens eine Leistungsleitung (94), welche an einem Verbindungspunkt (96) mit dem Kommunikationslink (50) verbunden ist,
- wenigstens eine kapazitive Kopplungskomponente (106), welche zwischen dem Eingang (87) des Empfängers und dem Verbindungspunkt (96) verbunden ist, wobei die kapazitive Kopplungskomponente (106) dazu geeignet ist, die modulierte Trägerwelle zu übertragen und die Übertragung der Versorgungsspannung zu blockieren.

## Claims

1. A transmission device (46,114) capable of transmitting data, said transmission device (46,114) comprising:
- an oscillator (54) capable of generating at least one carrier wave,
- a transmitter (56) comprising:
• at least one input (62) connected to the oscillator (54),
• an activation input (64) provided to receive an activation signal; the activation input (64) being capable of receiving a signal representative of data to be transmitted;
• at least one output (66) capable of generating a carrier wave modulated by the signal representative of the data to be transmitted;
• an additional output (68);
- a communication link (50) connected to the output (66) of the transmitter,
- at least one power line (70) connected to the communication link (50) at a connection point (74);
- at least one capacitive coupling component (82) connected between the output (66) of the transmitter and the connection point (74), the capacitive coupling component (82) being capable of transmitting the modulated carrier wave and blocking the transmission of the supply voltage,
- an additional communication link (51) connected to the additional output (68),
- an additional power line (72) connected to the additional communication link (51) at an additional connection point (76),
- at least one additional capacitive coupling component (84) connected between the additional output (68) of the transmitter and the additional connection point (76),
- a transformer (80) connected to the power line (70), said transformer (80) being capable of blocking the transmission of the modulated carrier wave.

2. The transmission device (46,114) according to claim 1, wherein the transmitter (56) is capable of generating the modulated carrier wave in a differential mode at the output (66) and the additional output (68).

3. The transmission device (46,114) according to any one of claims 1 and 2, which further comprises a processing unit (52) having an output (58) capable of generating a signal representative of data to be transmitted, said output (58) being connected to the activation input (64) of the transmitter (56).

4. The transmission device (46,114) according to any one of claims 1 to 3, which further includes a voltage supply source (78) connected to the power line (70).

5. The transmission device (46,114) according to any one of claims 1 to 3, which further includes a set (102) of electrical equipment connected to the power line (70).

6. A reception device (48,116) capable of receiving data, said reception device (48,116) comprising:
- a receiver (86,88) comprising an input (87) capable of receiving a carrier wave modulated by a signal representative of data and an additional input (89),
- a communication link (50) connected to the input (87) of the receiver, the communication link (50) being intended to be brought to a supply voltage and to transmit the modulated carrier wave,
- at least one power line (94) connected to the communication link (50) at a connection point (96);
- at least one capacitive coupling component (106) connected between the input (87) of the receiver and the connection point (96), said capacitive coupling component (106) being capable of transmitting the modulated carrier wave and of blocking the transmission of the supply voltage,
- an additional communication link (51) connected to the additional input (89),
- an additional power line (98) connected to the additional communication link (51) at an additional connection point (100),
- at least one additional capacitive coupling component (108) connected between the additional input (89) of the receiver and the additional connection point (100), said additional capacitive coupling component (89) being capable of transmitting the modulated carrier wave and blocking the transmission of the supply voltage, and,
- a filter (104) connected to the power line (94), said filter being capable of blocking the modulated carrier wave.

7. The reception device (48, 116) according to claim 6, which further includes a voltage supply source (78) connected to the power line (94).

8. The reception device (48, 116) according to any one of claims 6 and 7, which further includes a set (102) of electrical equipment connected to the power line (94).

9. A data and power transmission system (44, 113) including a transmission device (46, 114) according to any one of claims 1 to 5 and a reception device (48, 116) comprising a receiver (86,88) comprising an input (87) connected to the communication link (51), the receiver being capable of receiving a carrier wave modulated by a signal representative of data,
- at least one power line (94) connected to the communication link (50) at a connection point (96);
- at least one capacitive coupling component (106) connected between the input (87) of the receiver and the connection point (96), said capacitive coupling component (106) being capable of transmitting the modulated carrier wave and of blocking the transmission of the supply voltage.
